# FASCICULE DE BREVET EUROPEEN

(11) **EP 2 989 250 B1**
(45) Date de publication et mention de la délivrance du brevet: **07.03.2018**
(21) Numéro de dépôt: 14721534.7
(22) Date de dépôt: 10.04.2014
(51) Int. Cl.: D21H 21/44, D21H 21/48, B42D 15/00, B42D 25/00

(54) **ELEMENT DE SECURITE COMPORTANT UN HOLOGRAMME EN VOLUME**
SICHERHEITSELEMENT MIT VOLUMENHOLOGRAMM
SECURITY ELEMENT COMPRISING A VOLUME HOLOGRAM

(30) Priorité: 26.04.2013 FR 1353843
(43) Date de publication de la demande: 02.03.2016
(73) Titulaire: Oberthur Fiduciaire SAS, 75008 Paris (FR)
(72) Inventeur: SARRAZIN, Pierre, F-38620 Saint Geoire En Valdaine (FR)
(74) Mandataire: Nony
(86) Numéro de dépôt international: PCT/IB2014/060629
(87) Numéro de publication internationale: WO 2014/174402

(56) Documents cités:
- WO-A1-03/099581
- WO-A1-2011/107527
- WO-A1-2012/007120
- US-A1- 2011 049 864
- US-A1- 2012 319 395

## Description

La présente invention concerne les éléments de sécurité et les articles, notamment documents, sécurisés comportant de tels éléments.

### Arrière-plan

Les hologrammes sont largement utilisés pour sécuriser des documents.

US 6 873 444 B1 divulgue un procédé de fabrication d'un hologramme en volume, encore appelé hologramme de LIPPMANN BRAGG ou hologramme de LIPPMANN.

EP 2 453 320 A1 décrit un procédé de fabrication d'un hologramme en volume, dans lequel la couche holographique est protégée en surface par un film protecteur. La fixation de la couche holographique est assurée par une couche d'adhésif.

US 4 171 766 divulgue l'utilisation d'un hologramme porté par une feuille fixée sur une carte d'identité.

EP 0 403 134 A2 enseigne de superposer un hologramme et une information présente sur un emballage.

EP 1511 636 B1 divulgue la superposition d'un hologramme de surface et d'un hologramme de volume.

EP 2 362 275 A1 divulgue un hologramme en volume disposé devant une fenêtre d'un billet de banque.

EP 2 530 533 A1 décrit un élément de sécurité comportant une couche holographique dans laquelle est enregistré un hologramme de volume, fixée sur une couche porteuse à l'aide d'un adhésif. Une couche colorée peut recouvrir la couche holographique. La couche colorée peut être déposée par impression. Dans un exemple, une couche d'encre bleue non opaque de 0,5 µm après séchage est déposée.

US2012/0257266 A1 enseigne d'accoler deux couches holographiques restituant chacune un hologramme en volume.

US 2013/0003153 A1 décrit l'adjonction d'un composé luminescent au sein d'une couche holographique.

US 2011/0049864 A1 décrit un hologramme en volume qui recouvre une information sur un substrat, imprimée en relief. Une couche d'adhésif recouvre cette impression et présente une épaisseur variable du fait du relief de l'impression, ce qui entraine une diffusion différenciée de l'adhésif dans le matériau dans lequel l'hologramme
est enregistré et un changement local de la couleur de l'hologramme. La diffusion de l'adhésif est complexe à contrôler.

WO 2012/007120 décrit un élément de sécurité comportant un hologramme de volume superposé à un hologramme de surface dans lequel sont réalisés des ajours. L'élément de sécurité est complexe à visualiser, du fait de la présence d'un hologramme diffractif et d'un hologramme en volume. De plus, l'élément de sécurité est complexe et coûteux à réaliser. L'hologramme en volume est enregistré avec un motif, de sorte que l'étape d'enregistrement de l'hologramme est complexe et onéreuse. Les effets visuels dépendant de l'angle d'observation sont obtenus grâce à l'hologramme de surface.

WO 2011/107527 divulgue un fil de sécurité comportant un revêtement, au sein duquel sont présents des pigments orientés. Ce fil peut comporter optionnellement une couche holographique.

WO 03/009581 décrit un élément de sécurité comportant à la fois des structures holographiques en surface et en volume.

### Résumé

Il existe un besoin pour perfectionner encore les éléments de sécurité et les articles, notamment documents, sécurisés intégrant de tels éléments.

L'invention a pour objet, selon un premier de ses aspects, un élément de sécurité à intégrer à un article selon la revendication 1.

L'invention concerne, relativement à la présence d'une structure d'opacité variable, un élément de sécurité à intégrer à un article, notamment document, comportant :
- une couche holographique permettant de générer un hologramme en volume,
- une structure d'opacité variable non holographique générée par la présence
   a) d'une part d'ajour(s) et/ou de zones au moins partiellement translucides et d'autre part de zone(s) au moins partiellement opaque(s),
      et/ou
   b) de pigments plaquettaires orientés,
la structure d'opacité variable étant superposée au moins partiellement à l'hologramme dans une région de l'élément de sécurité observable en lumière transmise.
préférence situé derrière la structure d'opacité variable par rapport à l'observateur. De préférence encore, l'hologramme en volume est un hologramme visible en réflexion.

L'hologramme se superpose au moins partiellement d'une part à au moins un ajour et/ou à une zone au moins partiellement translucide et d'autre part à au moins une zone au moins partiellement opaque et/ou se superpose au moins partiellement auxdits pigments plaquettaires. Grâce à l'invention, l'hologramme peut être utilisé pour aider à percevoir visuellement la structure d'opacité variable et/ou en modifier l'aspect.

L'invention permet de réaliser une sécurité de premier niveau, facilement identifiable par l'homme de la rue, et de bénéficier de nouveaux effets esthétiques et attractifs avec des coûts de production relativement faibles.

L'hologramme en volume, de par sa nature, présente une transparence suffisante pour permettre d'observer en lumière transmise la structure d'opacité variable.

La présence de l'hologramme permet d'apporter un effet de couleur et/ou d'animation à l'observation de la structure d'opacité variable, qui peut ainsi être davantage mise en évidence pour l'homme de la rue.

Par « opacité variable », il faut comprendre que l'opacité varie dans le plan de la structure et/ou en fonction de l'angle d'observation.

Par « au moins partiellement opaque » il faut comprendre une opacité en lumière du jour correspondant à une densité optique d'au moins 0,7, correspondant à environ 20% de transmission, mieux d'au moins 1, encore mieux 1,5. La structure d'opacité variable peut comporter des zones complètement opaques à l'oeil, pour une observation devant un fond éclairé tel qu'une feuille blanche.

Par « au moins partiellement translucide » il faut comprendre une translucidité en lumière du jour correspondant à une densité optique strictement inférieure à 0,7 correspondant à environ 20% de transmission, mieux une densité optique inférieure à 0,5.

Entre les propriétés « au moins partiellement opaque » et « au moins partiellement translucide », il est préférable d'avoir une différence de densité optique au moins supérieure à 0,5, encore de préférence au moins 0,7.

La variation de l'opacité peut être liée à la présence d'une métallisation/démétallisation et/ou d'une impression. Dans ce cas, le ou les ajours peuvent être constitués par des absences de métallisation ou d'encre. La couche opaque peut être autre qu'un substrat fibreux, et la zone non opaque autre qu'une simple fenêtre ménagée dans ce substrat.

Dans le cas d'une métallisation, l'épaisseur de métal de la structure d'opacité variable est de préférence suffisante pour conférer une densité optique d'au moins 1,5. La densité optique est par exemple mesurée à l'aide d'un densitomètre TBX-MC de la société TOBIAS ASSOCIATES, INC, la mesure s'effectuant selon la norme ISO 5/2. La métallisation est de préférence effectuée sous vide, car elle apporte plus de sécurité, puisque sa mise en oeuvre nécessite alors des moyens industriels plus complexes.

Dans le cas d'une impression, l'encre utilisée est de préférence une encre pigmentée, de préférence de couleur non achromatique (i.e. non noire et non blanche) et aussi de préférence ayant une granulométrie de pigments D50 supérieure à 5 µm, afin d'atteindre une transparence réduite. L'encre peut comporter des particules d'un métal en tant que pigment.

Dans le cas d'une impression également, l'encre peut comporter des pigments plaquettaires capables de s'orienter sous l'effet d'un champ magnétique, ce qui permet de créer une couche dont l'opacité varie en fonction de l'angle d'observation, passant par un maximum dans une direction parallèle à la direction d'orientation des plaquettes et par un minimum quand la direction d'observation est sensiblement perpendiculaire au plan des plaquettes. De tels pigments sont connus par la publication EP1819525 B1.

Dans le cas de pigments plaquettaires réfléchissants, on est soit transparent en cas d'observation dans le sens d'inclinaison des plaquettes, soit opaque dans le cas d'une observation perpendiculaire aux plaquettes.

La variation de l'opacité peut être associée à un motif, qui peut être reproduit par ailleurs sur le document muni de l'élément de sécurité. Par exemple, un ajour ou une zone au moins partiellement translucide définit un motif présent par ailleurs sur le document ou l'élément de sécurité. Ce motif peut être un chiffre ou une lettre.

La variation de l'opacité peut être obtenue par un texte en négatif, par exemple du type CLEARTEXT®, les évidements définissant le texte correspondant aux zones de la structure d'opacité variable qui sont non opaques, car par exemple non imprimée ou démétallisées.

L'élément de sécurité peut comporter une couche de chromaticité variable.

Par « chromaticité variable », il faut comprendre que la couleur observée varie dans le plan de l'élément et/ou en fonction de l'angle d'observation.

Par exemple, une couche de chromaticité variable est obtenue en juxtaposant dans un plan des zones non opaques de couleurs différentes. Ces zones peuvent avoir globalement la même opacité. Cette couche de chromaticité variable peut se superposer au moins partiellement à la couche holographique et à la structure d'opacité variable. La présence d'une telle couche peut permettre de créer de nouveaux effets optiques.

La couche de chromaticité variable peut encore être réalisée avec un pigment goniochromatique, par exemple iridescent ou à cristaux liquides, ou par un réseau de diffraction, un hologramme de surface ou une structure photonique.

L'élément peut comporter une couche de support, notamment un film en PET, ou une couche en matière fibreuse.

L'invention a encore pour objet, selon un autre de ses aspects relatifs à la présence d'une couche semi-réfléchissante, indépendamment ou en combinaison avec ce qui précède ou ce qui suit, un élément de sécurité pour article, notamment document, sécurisé, comportant :
- une couche holographique permettant de générer un hologramme en volume,
- une couche semi-réfléchissante, superposée au moins partiellement à la couche holographique et de préférence également à une structure d'opacité variable, la couche holographique étant située de préférence entre la couche semi-réfléchissante et la structure d'opacité variable. Avantageusement, la couche semi-réfléchissante permet de mettre en valeur l'hologramme en volume en raison de l'aspect réfléchissant de la couche tout en conservant la visibilité en lumière transmise. En outre, cette couche semi-réfléchissante peut servir à masquer l'élément de sécurité lorsque ce dernier est introduit en fil à fenêtres (« windows thread »), ce qui est particulièrement intéressant lorsqu'une couche colorée est superposée à l'élément de sécurité. Enfin dans le cas d'un élément de sécurité disposé dans une fenêtre traversante, la couche semi réfléchissante permet de masquer l'élément de sécurité en réflexion sur la face sur laquelle la couche est disposée.

L'invention a encore pour objet, selon un autre de ses aspects relatif à la présence d'une structure diffusante, indépendamment ou en combinaison avec ce qui précède ou ce qui suit, un élément de sécurité pour article, notamment document, sécurisé, comportant :
- une couche holographique permettant de générer un hologramme en volume,
- une structure diffusante, se superposant au moins partiellement à la couche holographique, notamment micro-embossée, la couche holographique étant de préférence située entre la structure diffusante et une structure d'opacité variable se superposant au moins partiellement à la couche holographique et à la structure diffusante.

Un tel élément de sécurité présente des avantages détaillés plus loin.

L'invention a encore pour objet, selon un autre de ses aspects lié à la présence d'un agent luminescent, indépendamment ou en combinaison avec ce qui précède ou ce qui suit, un élément de sécurité pour article, notamment document, sécurisé, comportant :
- une couche holographique permettant de générer un hologramme en volume,
- une couche contenant un agent luminescent se superposant au moins partiellement à la couche holographique, mieux une première et une deuxième couche luminescente se superposant chacune au moins partiellement à la couche holographique et de préférence se superposant au moins partiellement entre elles, les couches luminescentes ayant de préférence des couleurs de luminescence différentes.

Un tel élément de sécurité permet d'obtenir de nouveaux effets optiques sous un éclairage provoquant la luminescence.

L'invention a encore pour objet, selon un autre de ses aspects lié à la présence de deux couches holographiques, indépendamment ou en combinaison avec ce qui précède ou ce qui suit, un élément de sécurité pour article, notamment document, sécurisé comportant :
- une première couche holographique permettant de générer un premier hologramme en volume, enregistré en transmission,
- une deuxième couche holographique permettant de générer un deuxième hologramme en volume, enregistré en réflexion, se superposant au moins partiellement au premier.

Un tel élément de sécurité peut comporter une première structure d'opacité variable se superposant au moins partiellement aux deux hologrammes en volume et préférentiellement une deuxième structure d'opacité variable se superposant également aux deux hologrammes en volume, la ou les structures d'opacité variable étant positionnées extérieurement aux couches holographiques ; dans le cas d'une structure comportant deux couches holographiques, les structures d'opacité variables peuvent ainsi se situer respectivement sur les côtés opposés de l'élément de sécurité.

Avantageusement, l'élément de sécurité est alors réalisé en deux parties disposées respectivement de part et d'autre d'un substrat fibreux traversé d'une fenêtre. Chaque partie comporte l'une des couches holographiques et à la structure d'opacité variable associée.

Un tel élément de sécurité apporte de nouveaux effets optiques et une sécurité supplémentaire.

L'invention a encore pour objet, selon un autre de ses aspects, lié à la présence d'une couche de chromaticité variable, indépendamment ou en combinaison avec ce qui précède ou avec ce qui suit, un élément de sécurité pour article, notamment document, sécurisé, comportant :
- une couche holographique permettant de générer un hologramme en volume,
- une couche de chromaticité variable comportant plusieurs zones colorées de couleurs différentes, se superposant à la couche holographique, au moins l'une de ces zones colorées, et de préférence toutes ces zones colorées, étant transparente,
- et de préférence, une structure d'opacité variable se superposant au moins partiellement à la couche holographique et auxdites zones colorées.

La couche holographique peut être enregistrée de manière à restituer au moins deux hologrammes constitués par des aplats de couleurs différentes, se combiner de diverses manières avec les zones colorées de la couche de chromaticité variable.

### Hologramme en volume

Pour tous les aspects de l'invention, par « hologramme en volume », il faut comprendre un hologramme généré par réflexion ou transmission de la lumière en formant un réseau de plans de franges d'interférences ou interférentiel (réseau de Bragg) enregistré dans l'épaisseur d'une couche sensible, de préférence photosensible.

La couche holographique peut présenter une structure extérieure lisse, à la différence des hologrammes de surface réalisés par embossage.

Un exemple de réalisation d'hologramme en volume est donné dans le brevet US 5 319 476, colonne 2, lignes 18 à 44 et dans la demande US 2013/0003153 A1, [0017] à [0022].

La couche holographique peut être constituée par un complexe réalisé avec une couche de 6 à 15 µm d'épaisseur, mieux entre 8 et 10 µm, d'une résine photosensible, déposée sur un film porteur; de préférence en PET, de 6 ou 12 µm d'épaisseur, qui peut servir également de couche protectrice le cas échéant.

La couche holographique peut aussi être constituée par un complexe holographique comportant une couche d'une résine photosensible et un film porteur, ainsi qu'une couche d'un adhésif entre les deux, comme décrit dans la demande EP 2 530 533 A1. La couche de résine photosensible est par exemple telle que décrite aux paragraphes [0041] à [0050] ou [0051] à [0058].

La restitution de l'hologramme peut s'effectuer en lumière blanche non cohérente.

L'hologramme peut restituer seulement un aplat de couleur, c'est-à-dire sans motif, par exemple le rouge, vert, bleu, jaune, cyan, magenta, ou une animation, par exemple le passage d'un aplat d'une couleur à une autre couleur, quand l'angle d'observation change. Par exemple, l'hologramme restituant un aplat de couleur sans motif peut être obtenu par réflexion ou transmission de la lumière à partir d'un objet plat, ayant une surface sensiblement uniforme, en formant un réseau de plans de franges d'interférence ou interférentiel, qui est enregistré dans l'épaisseur d'une couche photosensible. La réalisation de l'hologramme de telle sorte qu'il restitue seulement un aplat de couleur le rend relativement peu coûteux à produire.

Quand la structure d'opacité variable comporte des pigments plaquettaires orientés, il peut être particulièrement avantageux que la direction d'observation de l'hologramme qui fait apparaître l'image enregistrée, coïncide avec la direction d'orientation des pigments plaquettaires. On obtient une sécurité particulièrement difficile à contrefaire.

Dans le cas d'un hologramme en volume enregistré en réflexion, l'observateur peut percevoir, lorsqu'il regarde l'élément de sécurité en lumière transmise derrière une source de lumière blanche incohérente, la structure d'opacité variable sans percevoir l'hologramme. Lorsque l'observateur observe l'élément de sécurité en réflexion, il peut voir la structure d'opacité variable éclairée par l'hologramme, au moins pour une direction d'observation.

Dans le cas d'un hologramme en volume enregistré en transmission, l'observateur peut percevoir en observation en réflexion seulement la structure d'opacité variable. La couleur générée par l'hologramme apparaît lorsque l'hologramme est observé en lumière transmise, auquel cas la structure d'opacité variable est visible avec l'hologramme.

L'hologramme peut ne comporter qu'un seul motif enregistré, qui peut être un aplat de couleur. En variante, l'hologramme peut comporter plusieurs motifs enregistrés, qui peuvent être chacun un aplat de couleur. Dans ce cas, plusieurs motifs peuvent être agencés pour apparaître respectivement derrière des motifs différents de la structure d'opacité variable ; par exemple, celle-ci comporte un texte en écriture négative et les différentes lettres de ce texte apparaissent de couleurs différentes en raison de la présence d'aplats de couleurs différentes de l'hologramme en volume.

L'hologramme en volume peut aussi comporter des motifs différents, par exemples des aplats de couleurs différentes, qui sont disposées de manière à apparaître dans une même fenêtre du document.

L'hologramme en volume peut encore être réalisé de façon à avoir des motifs qui sont enregistrés de façon à apparaître pour des angles d'observation respectifs différents. Il s'agit par exemple de plusieurs aplats de couleur qui deviennent visibles pour des angles d'observation respectifs différents. Ces aplats peuvent être superposés à des motifs différents de la structure d'opacité variable, par exemple des lettres différentes en écriture négative. Dans ce cas, lorsque l'élément de sécurité est basculé progressivement par rapport à l'observateur de façon à faire apparaître les motifs, ceux-ci peuvent devenir visibles successivement, en fonction de l'augmentation de l'angle d'observation.

La couche holographique peut être enregistrée avec un aplat de couleur et se superposer à une couche colorée avec interposition de la couche d'opacité variable, de façon à ce que la couche holographique apparaisse avec au moins deux zones de couleurs différentes, du fait de leur superposition avec la couche colorée et de la présence de la couche d'opacité variable. Les zones qui apparaissent de couleurs différentes peuvent être juxtaposées dans le plan de la couche holographique.

La couche holographique peut être enregistrée avec des zones dont la couleur apparaît pour des angles d'observations différents.

En variante, à la fois les couleurs et les angles pour lesquels ces couleurs apparaissent sont distincts.

### Elément de sécurité

Pour tous les aspects de l'invention, l'élément de sécurité peut se présenter sous forme d'élément qui est intégré dans un substrat fibreux lors de la fabrication de celui-ci ou qui est rapporté à sa surface. L'élément de sécurité se présente par exemple sous la forme de patch, de fil de sécurité ou de foil ou de film de protection de données variables.

L'élément de sécurité peut être exposé à l'environnement extérieur sur ses deux faces opposées ou l'être sur seulement l'une d'entre elles ou être recouvert sur ses deux faces par une ou plusieurs couches non opaques. L'élément de sécurité peut être d'une seule pièce au moment de son intégration sur l'article, notamment le document, ou être composé de plusieurs sous-éléments qui sont assemblés par l'intermédiaire de l'article, notamment du document, par exemple étant rapportés sur des faces différentes du substrat.

Ces sous-éléments peuvent venir ou non en contact l'un avec l'autre. L'un peut porter l'hologramme et l'autre la structure d'opacité variable. L'un peut être fixé sur une face du substrat, et l'autre sur la face opposée, de part et d'autre d'une fenêtre du document.

L'épaisseur de l'élément de sécurité peut être inférieure ou égale à 50 µm, étant par exemple comprise entre 30 et 40 µm.

L'élément de sécurité peut comporter une couche semi-réfléchissante qui se superpose au moins partiellement à la couche holographique et à la structure d'opacité variable. Il peut s'agir d'une couche de métal d'épaisseur suffisamment fine pour être semi-réfléchissante, ou d'une trame imprimée ou métallisée.

L'élément de sécurité peut comporter une structure diffusante qui se superpose au moins partiellement à la couche holographique et à la structure d'opacité variable.

Il peut s'agir d'une couche micro-embossée, notamment une couche d'un adhésif micro-embossée.

Dans un exemple de mise en oeuvre de l'invention, l'élément comporte une couche colorée non opaque superposée au moins partiellement à l'hologramme et/ou à la structure d'opacité variable, notamment une couche colorée présentant une couleur uniforme ou plusieurs aplats de couleur, notamment sous forme de zones juxtaposées. La couche colorée peut être colorée par impression et/ou en masse, notamment par ajout de colorant(s) ou de pigment(s) coloré(s).

Dans un exemple de mise en oeuvre de l'invention, l'élément comporte une deuxième couche holographique permettant de générer un deuxième hologramme en volume, superposé au moins partiellement au premier hologramme, le deuxième hologramme se superposant à au moins une zone non opaque de la structure d'opacité variable, l'un des deux hologrammes, de préférence celui le plus proche de l'observateur, étant de préférence un hologramme enregistré en transmission et l'autre un hologramme enregistré en réflexion, les deux hologrammes étant de préférence situés de part et d'autre d'un substrat comportant une fenêtre à travers laquelle une observation en lumière transmise peut s'effectuer

Dans un exemple de mise en oeuvre de l'invention, l'élément de sécurité comporte des premier et deuxième hologrammes différents, notamment ayant des couleurs et/ou des motifs différents, notamment enregistrés dans ladite couche holographique ou dans des première et deuxième couches holographiques respectives, les premier et deuxième hologramme se superposant de préférence respectivement à des motifs différents définis par la structure d'opacité variable, par exemple des caractères alphanumériques différents d'un texte en écriture négative, ou étant destinés à apparaître dans des fenêtres différentes d'un substrat.

Dans un exemple de mise en oeuvre de l'invention, l'hologramme comporte deux zones juxtaposées de couleurs différentes, et l'élément de sécurité comporte deux zones colorées juxtaposées, de couleurs différentes, se superposant aux zones colorées de l'hologramme, notamment avec superposition d'une zone colorée de l'hologramme avec une zone colorée respective.

### Article, notamment document, sécurisé

L'invention a encore pour objet un article, notamment document, sécurisé, comportant un élément de sécurité selon l'invention, selon l'un quelconque de ses aspects, observable en lumière transmise au moins dans ladite région de superposition de l'hologramme en volume et de la structure d'opacité variable, de la couche semi-réfléchissante de la structure diffusante, de la couche de chromaticité variable et/ou d'une autre couche holographique générant un hologramme en volume.

L'élément de sécurité peut être superposé à une fenêtre du document, notamment une fenêtre traversante.

La fenêtre peut être traversante et l'élément de sécurité être disposé d'un côté de la fenêtre, un film d'obturation étant disposé de l'autre côté de la fenêtre.

Alternativement, la structure d'opacité variable peut être disposée d'un côté du document et l'hologramme en volume disposé du côté opposé, avec la structure et l'hologramme se superposant au moins partiellement à à la fenêtre traversante.

Le film d'obturation peut être coloré, notamment être coloré dans la masse ou par impression, ou métallisé avec une densité optique inférieure à 2, de préférence inférieure à 1.

De préférence, que l'élément de sécurité soit disposé d'un côté de la fenêtre ou que la structure d'opacité variable soit disposée d'un côté du document et l'hologramme en volume disposé de l'autre côté, l'élément de sécurité peut en outre être pourvu d'une couche semi-réfléchissante du côté de l'hologramme opposé à celui de la structure d'opacité variable. Le caractère semi-réfléchissant permet d'observer le motif de la structure d'opacité variable en lumière transmise, car non opaque.

L'article peut être un passeport, une carte d'identité, une carte d'accès, un permis de conduire, une carte à jouer ou à collectionner interactive, un moyen de paiement, notamment une carte de paiement, un billet de banque, un timbre fiscal, une vignette, un bon d'achat ou un coupon, une carte de transport, de fidélité, de prestation ou d'abonnement, un jeton ou une plaque de casino.

### Procédé d'authentification

L'invention a encore pour objet un procédé d'authentification d'un article, notamment document, sécurisé selon l'invention, comportant l'observation de l'élément de sécurité en transmission et/ou en réflexion. En transmission, on observe le motif formé par exemple par démétalisation, et en réflexion ce motif apparaît par le biais de l'hologramme en volume disposé dessous, lorsque l'hologramme a été enregistré en réflexion. Il n'est pas nécessaire de placer l'élément de sécurité devant un fond sombre.

L'observation peut se faire en lumière visible, notamment blanche, par exemple en regardant la source de lumière à travers l'élément de sécurité. Cette observation permet par exemple de reconnaître une information véhiculée par la structure d'opacité variable, par exemple un texte ou un motif. Dans ce cas, l'hologramme n'est pas visible lorsqu'il a été enregistré en réflexion.

On peut aussi observer l'élément de sécurité en réflexion, notamment lorsque celui-ci présente une face extérieure directement observable. Cette observation en réflexion permet de voir au moins une couleur générée par l'hologramme, dans cas où celui-ci est enregistré en réflexion.

Dans le cas d'un hologramme enregistré en transmission, celui-ci apparaît en lumière transmise.

L'élément de sécurité peut comporter à la fois un hologramme enregistré en réflexion et un hologramme enregistré en transmission, les couches holographiques générant ces hologrammes se superposant.

Dans ce cas, le procédé d'authentification comporte avantageusement une observation en transmission et une observation en réflexion.

D'une manière générale, l'observation peut encore se faire en lumière UV ou IR, lorsque l'hologramme restitue une lumière dans le domaine visible sous illumination UV ou IR. Dans ce cas, l'élément de sécurité comporte avantageusement un agent luminescent, par exemple fluorescent, qui apparaît également lors de l'observation, et dont les effets coloriels peuvent se combiner avec ceux de l'hologramme.

Dans un exemple de mise en oeuvre de l'invention, on fait varier l'inclinaison de l'angle d'observation par rapport à l'élément de sécurité et l'on trie une information concernant l'authenticité en cas d'apparition successive de motifs, notamment formés par démétallisation, le long de l'élément de sécurité. L'observation peut s'effectuer avec l'hologramme situé derrière la structure d'opacité variable par rapport à l'observateur.

L'invention pourra être mieux comprise à la lecture de la description détaillée qui va suivre, d'exemples non limitatifs de mise en oeuvre de celle-ci, et à l'examen du dessin annexé, sur lequel :
- la figure 1 représente de façon schématique un exemple d'article sécurisé selon l'invention,
- la figure 2 est une coupe selon II-II de la figure 1,
- les figures 3 à 22 représentent d'autres exemples d'articles sécurisés ou d'éléments de sécurité selon l'invention.

Sur les figures, schématiques, les proportions relatives réelles des différentes couches n'ont pas été nécessairement respectées, dans un souci de clarté du dessin. Certaines couches peuvent avoir été représentées de façon monolithique dans un souci de simplification, alors qu'elles peuvent être constituées de plusieurs sous-couches en réalité, comme c'est le cas par exemple de la couche holographique qui peut être constituée d'un complexe multicouche. De plus, certaines couches peuvent être assemblées par l'utilisation de couches adhésives disposées entre elles, qui ne sont pas toujours représentées sur les figures. Enfin, en présence de zones opaques et non opaques juxtaposées, on n'a représenté que schématiquement cette présence avec deux zones seulement disposées côte-à-côte, étant entendu que dans la réalité ces différentes zones seront le plus souvent plus de deux, avec des agencements pouvant être complexes, pour définir un texte ou un microtexte ou une image tramée par exemple.

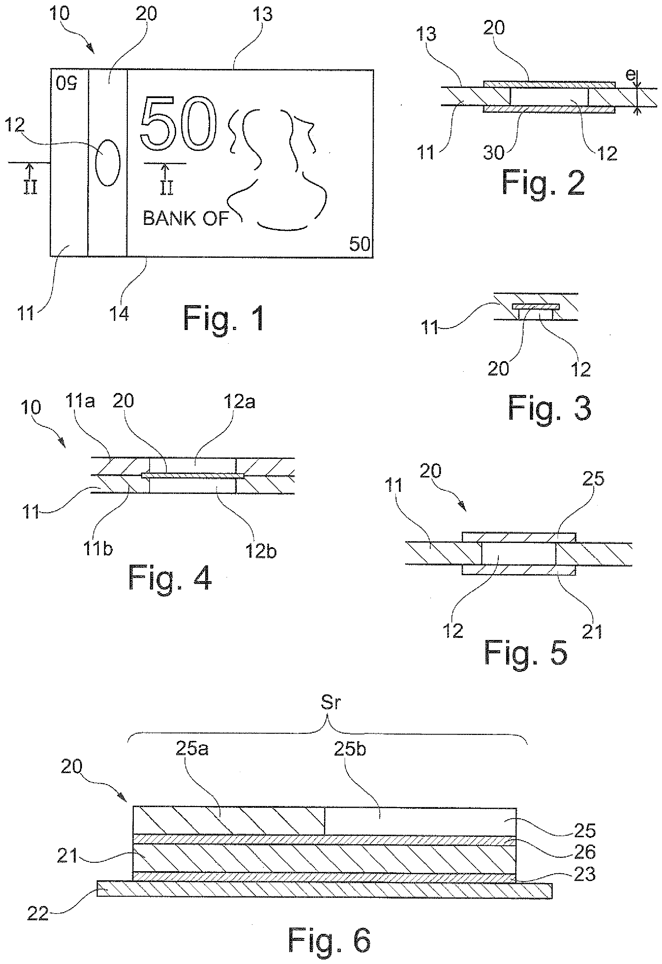

L'article sécurisé 10 représenté à la figure 1, par exemple un billet de banque, comporte un substrat 11, par exemple fibreux, tel qu'un papier, muni d'une fenêtre 12, réalisée par exemple par découpe du substrat 11 ou d'un jet de celui-ci dans le cas d'une structure multijet, cette fenêtre 12 étant recouverte d'un côté par un élément de sécurité 20 selon l'invention, comme illustré à la figure 2, et de l'autre côté par un film d'obturation 30, qui peut être disposé de façon repérée par rapport à l'élément 20. Par exemple, le film d'obturation 30 peut être un film semi-réfléchissant. Avantageusement, la couche semi-réfléchissante permet de mettre en valeur l'hologramme en volume en raison de l'aspect réfléchissant de la couche tout en conservant la visibilité en lumière transmise. En outre, cette couche semi-réfléchissante peut servir à masquer l'élément de sécurité lorsque ce dernier est introduit en fenêtres (« windows thread »), ce qui est particulièrement intéressant lorsqu'une couleur est superposée à l'élément de sécurité. Enfin, dans le cas d'un élément de sécurité disposé dans une fenêtre traversante, la couche semi-réfléchissante permet de masquer l'élément de sécurité en réflexion sur la face sur laquelle la couche est disposée.

L'invention n'est pas limitée à un type d'article sécurisé en particulier, et celui-ci peut encore être un document d'identité tel qu'une carte d'identité par exemple, ou une carte d'accès. Le substrat 11 peut ainsi être non fibreux.

La fenêtre 12 peut avoir un contour de toute forme, par exemple circulaire, elliptique ou polygonale, notamment de polygone régulier ou non.

La fenêtre 12 peut être unique sur le document ou ce dernier peut en comporter plusieurs. Dans ce cas, les fenêtres peuvent être disposées sur une même face du document, ou sur des faces opposées. De préférence, les fenêtres sont disposées sur des faces opposées du document, de manière à ce qu'au moins une fenêtre sur une face du document se superpose au moins partiellement à une fenêtre sur l'autre face pour former ensemble une fenêtre traversante.

L'élément de sécurité 20, tout comme le film d'obturation 30, peut se présenter sous forme de bandes s'étendant d'un côté 13 du document au côté opposé 14.

La largeur du film d'obturation 30 et celle de l'élément de sécurité 20 sont de préférence chacune supérieures à la largeur de la fenêtre 12, de telle sorte que l'élément de sécurité 20 déborde de la fenêtre 12, de même que le film d'obturation 30, de tous les côtés.

Le substrat 11 présente une épaisseur *e* comprise par exemple entre 10 et 1000 µm, mieux entre 50 et 700 µm.

Le substrat 11 peut comporter des fibres naturelles et/ou synthétiques. Le substrat peut encore être non fibreux ou formé d'une structure multicouche comportant au moins une couche fibreuse et une couche de matière thermoplastique.

La fixation de l'élément 20 sur le substrat 11 peut s'effectuer par lamination et/ou collage, à chaud ou à froid.

Il en est de même du film de protection 30.

Sur la figure 3. l'élément de sécurité 20 se présente sous la forme d'un fil incorporé en fenêtre(s) dans le substrat 11.

Le fil est par exemple incorporé lors de la formation du substrat fibreux 11 sur une machine à forme ronde par exemple, les fenêtres étant formées par exemple en modifiant l'accumulation des fibres sur la toile de formation. En variante, le substrat 11 est bi-jet et le fil est introduit entre les jets, dont l'un au moins présente des fenêtres, les jets étant par exemple assemblé en phase humide.

Dans l'exemple de la figure 4, le document 10 comporte un substrat 11 formé de deux jets fibreux 11a et 11b assemblés ensemble. L'élément de sécurité 20 est disposé entre les jets 11a et 11b.

Le jet 11a comporte une fenêtre 12a et le jet 11b une fenêtre 12b, qui se superpose au moins partiellement à la fenêtre 12a, de telle sorte que l'on puisse observer à travers les fenêtres 12a et 12b l'élément 20 en lumière transmise.

Dans le cas où l'élément de sécurité 20 est un fil de sécurité, sa largeur peut être relativement faible, de préférence inférieure ou égale à 10 mm.

L'élément de sécurité 20 peut encore être un patch inséré entre deux jets de papier ou collé sur la surface du substrat. Le patch ne s'étend pas sur toute la largeur du substrat 11.

L'élément de sécurité 20 peut se composer de plusieurs éléments constitutifs disposés de part et d'autre du substrat 11 du document 10.

Aussi, dans l'exemple de la figure 5, l'élément de sécurité 20 comporte une structure d'opacité variable 25 disposée d'un côté du substrat 11 et une couche holographique 21 disposée du côté opposé. Au moins une fenêtre 12 permet d'observer à travers la superposition de la structure d'opacité variable 25 et de l'hologramme en volume généré par la couche holographique 21. Cette fenêtre 12 peut être remplie ou non d'un matériau solide transparent.

D'une façon générale, l'élément de sécurité 20 peut être rapporté sur un substrat non fibreux, tel qu'un film en matière thermoplastique, souple ou rigide. L'élément de sécurité 20 peut encore être intégré à une structure multicouche comportant au moins une couche fibreuse, en papier, et une couche en matière thermoplastique.

L'élément de sécurité 20 peut encore être intégré entre deux feuilles de matière thermoplastique transparentes.

L'article 10 peut comporter divers éléments de sécurité annexes, de premier niveau, deuxième ou troisième niveau. Parmi les éléments de sécurité supplémentaires, certains sont détectables à l'oeil, en lumière du jour ou en lumière artificielle, sans utilisation d'un appareil particulier. Ces éléments de sécurité comportent par exemple des fibres ou planchettes colorées, des fils imprimés ou métallisés totalement ou partiellement. Ces éléments de sécurité sont dits de premier niveau.

D'autre type d'éléments de sécurité supplémentaires sont détectables seulement à l'aide d'un appareil relativement simple, tel qu'une lampe émettant dans l'ultraviolet (UV) ou l'infrarouge (IR). Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant dans une longueur d'onde de 365 nm. Ces éléments de sécurité sont dits de deuxième niveau.

D'autres types d'éléments de sécurité supplémentaires nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, le document. Ces éléments de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité sont dits de troisième niveau.

Sur les figures 2, 3 et 4, l'élément de sécurité 20 a été représenté de façon simplifiée. En particulier, la couche holographique 21 qu'il comporte peut être constituée d'un complexe multicouche.

On va maintenant décrire en se référant aux figures 6 à 22 différents exemples d'éléments de sécurité 20 selon l'invention.

Sur toutes ces figures, la référence 21 désigne une couche holographique dans laquelle a été enregistré l'hologramme en volume. Cet hologramme peut avoir été enregistré en réflexion ou en transmission. Cette couche peut restituer en tant qu'hologramme seulement un aplat de couleur, c'est-à-dire que l'ensemble de la couche apparaît d'une même couleur, lorsqu'observée par exemple en réflexion en lumière visible dans le cas d'un hologramme enregistré en réflexion, par exemple la couleur verte, rouge, jaune, orange, violet ou bleue.

Lorsque d'une façon générale la couche holographique 21 ne restitue pas un aplat de couleur, la répartition des zones de différentes couleurs peut définir un texte alphanumérique, un logo ou une image plus complexe, telle qu'un personnage, animal, paysage ou bâtiment.

Le nombre de couleurs restituées par la couche holographique 21, sous observation en lumière blanche illuminant D₆₅, peut être égal à 1 ou en variante être supérieur à 1.

Lors de la restitution par la couche holographique 21 d'au moins deux couleurs, l'une des couleurs peut définir un texte ou une trame de points et l'autre couleur un fond uni autour de ce texte ou de ces points.

L'élément de sécurité 20 peut comporter également, comme illustré sur la figure 6 notamment, une couche de support 22 qui est par exemple un film en matière thermoplastique transparente, par exemple du PET. Alternativement la couche de support 22 peut être constituée d'une matière fibreuse comme du papier.

L'épaisseur de la couche holographique 21, notamment lorsqu'elle est constituée par un complexe résine photosensible collé sur film porteur, est par exemple comprise entre 1 et 20 µm.

L'épaisseur de la couche de support 22 est par exemple comprise entre 3 et 100 µm.

La couche de support 22 peut porter ou non une ou plusieurs autres couches, du côté situé à l'opposé de la couche holographique 21.

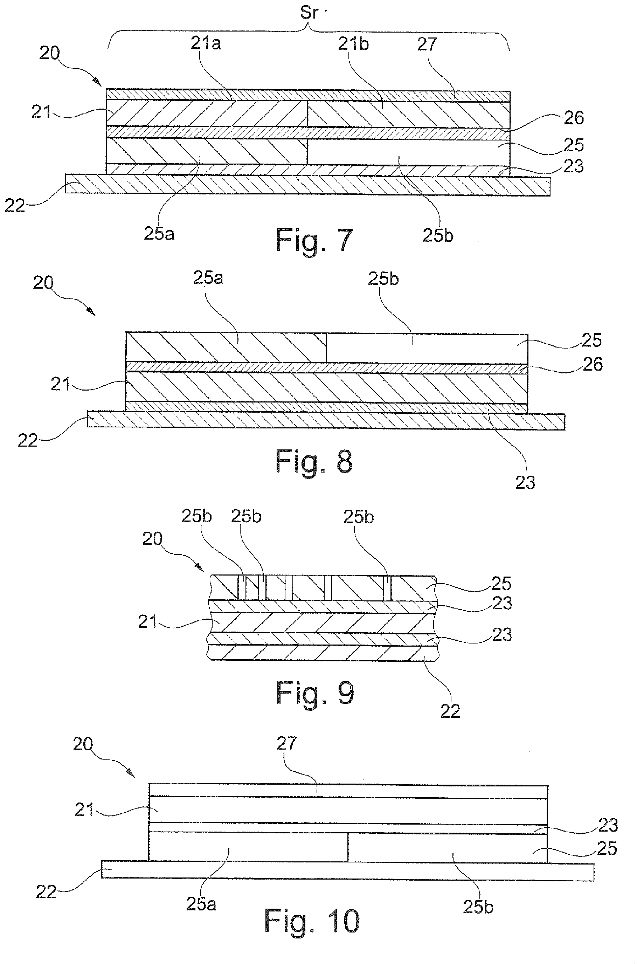

Dans l'exemple de la figure 6, la couche holographique 21 est fixée par l'intermédiaire d'une couche adhésive 23 à la couche de support 22. Il en est de même dans l'exemple de la figure 8.

L'épaisseur de la couche d'adhésif 23 est par exemple comprise entre 1 et 10 µm, de préférence entre 1 et 5 µm.

L'adhésif utilisé est par exemple un adhésif du type adhésif polymère base polyuréthane ou à base de copolymère acrylate - uréthane tel que ceux de la gamme NOLAX.

Conformément au premier aspect de l'invention, l'élément de sécurité 20 comporte également une structure d'opacité variable 25, par exemple sous forme de couche unique, qui se superpose au moins partiellement à la couche holographique 21, dans au moins une région de recouvrement, d'étendue Sᵣ.

Les couches 21 et 25 peuvent être de même étendues que ladite région de recouvrement, ce qui est préféré, comme illustré sur les figures 6 et 8 notamment.

Toutefois, en variante, la région de recouvrement est formée par superposition des couches 21 et 25 sur une partie seulement de leur étendue, la couche holographique 21 étant par exemple moins large que la couche 25 ou inversement. De préférence, la couche holographiques 21 occupant une étendue Sₕ, on a Sᵣ/Sₕ ≥ 0,5, mieux Sᵣ/Sₕ ≥ 0,75.

Lorsque l'élément de sécurité 20 en place sur le document 10 est observé, toute la région de recouvrement peut être visible, ou en variante seulement une partie de celle-ci, la région de recouvrement étant par exemple partiellement cachée par le substrat 11.

La couche de support 22 peut recouvrir tout ou partie de la face correspondante du substrat 11.

Sur les figures 1 et 2, la couche de support 22 n'occupe qu'une partie seulement de la face 13 du substrat 11 ; en variante, la couche de support 22 forme un film de protection de l'ensemble de la face 13. La couche holographique 21 ne s'étend par exemple que dans la région de la fenêtre 12, ou s'étend à la fois sur celle-ci et sur substrat 11. Cela peut permettre de créer un effet supplémentaire, en permettant d'observer un contraste lors de la restitution de l'hologramme, entre ce qui est visible à travers la fenêtre et ce qui est situé hors de la fenêtre. La couche holographique 21 peut recouvrir entre 5 et 100 % de l'étendue totale de la face 13 du support 22.

D'une façon générale, la couche holographique 21 peut s'étendre de façon continue sur le document 10, c'est-à-dire qu'il n'y a pas deux régions disjointes formées par la couche holographique 21. En variante, la couche holographique 21 s'étend de façon discontinue sur le document 10. Par exemple, des portions de la couche holographique 21 se répètent à intervalles réguliers sur la couche de support, ces portions étant disjointes. Ces portions peuvent restituer une même couleur ou des couleurs distinctes. Ces portions peuvent restituer un hologramme pour le même angle d'observation ou pour des angles différents.

D'une façon générale, la structure d'opacité variable 25 peut présenter une opacité variable dans son plan.

Par exemple, la structure d'opacité variable est formée par une couche 25 qui présente une ou plusieurs régions opaques 25a et une ou plusieurs régions non opaques 25b, la ou les régions 25a correspondant par exemple à la présence d'une métallisation et/ou d'une impression et/ou à la présence d'une couche ajourée au moins partiellement opaque, notamment fibreuse, et la ou les régions 25b à la présence d'une démétallisation et/ou d'une absence d'impression et/ou à des ajours de ladite couche ajourée ou à des zones translucides. Les régions non opaques peuvent ainsi être formées autrement que par un ajour à travers un substrat fibreux opaque.

Des motifs peuvent être formés par les régions opaques et/ou non opaques. Ces motifs sont par exemple des caractères alphanumériques et/ou des logos et/ou toute autre marque figurative. Il peut s'agir d'un texte renseignant sur le nom de la banque, du pays et/ou sur la valeur de la coupure.

Dans le cas où les régions non opaques 25b sont formées par des ajours d'une couche au moins partiellement opaque, notamment fibreuse, ces ajours peuvent être constitués par des microperforations, occupant chacune par exemple entre 0,5 et 1.0⁻⁹ cm².

Dans l'exemple de la figure 9, la structure d'opacité variable 25 se présente sous la forme d'une couche ajourée comportant des microperforations 25b. La couche ajourée est par exemple un jet de papier et les microperforations 25b sont par exemple réalisées à l'aide d'un laser à travers le jet de papier.

D'une façon générale, l'information qui apparaît à l'observation en lumière transmise du ou des motifs définis par la structure d'opacité variable 25 peut se retrouver sur le document sécurisé par ailleurs, notamment lorsque cette information porte sur la valeur de la coupure dans le cas d'un billet de banque.

Les motifs peuvent être observables à l'oeil nu ou nécessiter l'utilisation d'un dispositif grossissant pour pouvoir être observés.

L'observation se fait de préférence en lumière blanche, l'hologramme étant de préférence restitué sous cet éclairage. En variante, l'observation se fait sous éclairage UV ou IR, notamment lorsque la couche holographique 21 est prévue à cet effet.

La plus grande dimension d'un motif, notamment d'un caractère, formé par démétallisation, au sein de la structure d'opacité variable 25, est par exemple inférieure ou égale à 2 mm, et celle d'un motif formé par métallisation ou impression peut également être inférieure ou égale à 2 mm. Le motif réalisé par métallisation/démétallisation peut être réalisé conformément à l'enseignement de la demande WO 2006/066927, sous forme de points restituant une image en lumière transmise.

D'une façon générale, dans le cas d'une structure d'opacité variable 25 réalisée à partir d'une couche métallisée, cette couche peut comporter en tant que sous-couches constitutives un film de support, par exemple en PET, et un dépôt d'un ou plusieurs métaux sur ce film, d'un côté ou des deux côtés opposés de ce film. L'épaisseur de métal dépend de l'opacité recherchée dans les zones opaques. En tant que métaux utilisables pour réaliser la structure d'opacité variable 25 par métallisation/démétallisation, on peut citer l'aluminium, le cuivre, l'or, le fer, l'argent, le chrome, le nickel, le zinc, le cadmium, le bismuth et leurs alliages et oxydes.

La structure d'opacité variable 25 peut comporter des points de trame définissant une image d'un objet, d'un personnage, d'un bâtiment ou d'un paysage par exemple.

Dans le cas où la structure d'opacité variable 25 définit une image tramée, il peut être avantageux que l'hologramme restitué soit un aplat de couleur qui constitue un fond coloré facilitant la perception de l'image, par exemple un fond vert qui semble rétroéclairer l'image, l'image tramée étant ainsi visible en réflexion.

La structure d'opacité variable 25 peut être solidarisée à la couche holographique 21 par l'intermédiaire d'une couche adhésive au moins partiellement translucide 26, comme illustré à la figure 6 notamment.

La couche adhésive 26 peut être remplacée par une couche de protection telle qu'un vernis, qui est déposée sur la couche holographique 21, et qui sert de support aux zones opaques 25a, lesquelles sont alors formées par exemple par impression. La nature des couches adhésives 23 et 26 peut être la même.

Dans l'exemple de la figure 10, la couche d'opacité variable 25 est située entre la couche holographique 21 et celle de support 22.

Par exemple, la couche de support 22 reçoit une impression ou une métallisation pour former une structure 25 d'opacité variable et la couche holographique 21, de préférence à l'état de complexe multicouche autoporteur, est déposée sur cette couche 25. La couche holographique 21 peut être recouverte par un film de protection 27, transparent et porteur ou non de sécurités additionnelles.

Le film de protection 27 peut être constitué d'un film transparent d'une matière thermoplastique telle que le polyéthylène, le polypropylène et autres polyoléfines, le PTFE, le PVDF, l'EVA, le PVA (alcool polyvinylique), le PMMA, PS (polyéther sulfone), le PEK (polyéther kétone), le PA, le copolymer de tétrafluoroéthylène - perfluoroalkyl vinyl éther), le PET et le polyamide. L'épaisseur du film va de préférence de 2 à 200 µm, mieux de 10 à 50 µm.

L'exemple de la figure 8 reprend la structure de la figure 6, à l'exception de l'utilisation d'une couche d'adhésif colorée 23 pour fixer la couche holographique 21 à la couche de support 22. Cela peut permettre de modifier l'apparence de l'élément de sécurité 20, notamment lorsque celui-ci est observé en transmission ou en réflexion. Le choix de la couleur de la couche adhésive 23 peut s'effectuer en fonction de celle de l'hologramme restitué par la couche holographique 21, de façon à générer une troisième couleur par synthèse additive à partir des deux autres couleurs, par exemple générer du jaune à partir du vert (hologramme) et du rouge (adhésif coloré). Dans une variante, la couche adhésive est incolore mais un film coloré additionnel est inséré entre la couche de support 22 et la couche holographique 21.

En variante encore, une impression colorée est déposée sur la couche de support 22 ou la couche holographique 21.

Dans l'exemple de la figure 7, la couche holographique présente des zones 21a et 21b qui peuvent apparaître de couleurs différentes du fait de la superposition de ces zones 21a et 21b avec la couche colorée 23 et de la présence de la couche d'opacité variable. Ces zones 21a et 21b peuvent apparaître à l'observateur pour le même angle d'observation ou pour des angles différents.

Une zone 21a ou 21b apparaissant d'une couleur donnée de la couche holographique 21 peut se superposer exactement avec une zone d'opacité donnée de la structure d'opacité variable 25 ; dans l'exemple de la figure 7, c'est le cas de la zone 21a qui se superpose exactement à la zone opaque 25a et le cas de la zone 21b qui se superpose exactement à la zone non opaque 25b, pour présenter une couleur différente par superposition avec la couche colorée 23.

Une couche colorée peut être interposée entre la couche d'opacité variable 25 et la couche de support 22, cette couche colorée étant par exemple, comme illustré à la figure 7, une couche d'adhésif colorée 23. Une autre couche adhésive 26, non colorée, peut assurer la fixation de la couche holographique 21 sur la structure d'opacité variable 25.

Dans des variantes, la couche de support 22 se situe entre la couche holographique 21 et la structure d'opacité variable 25.

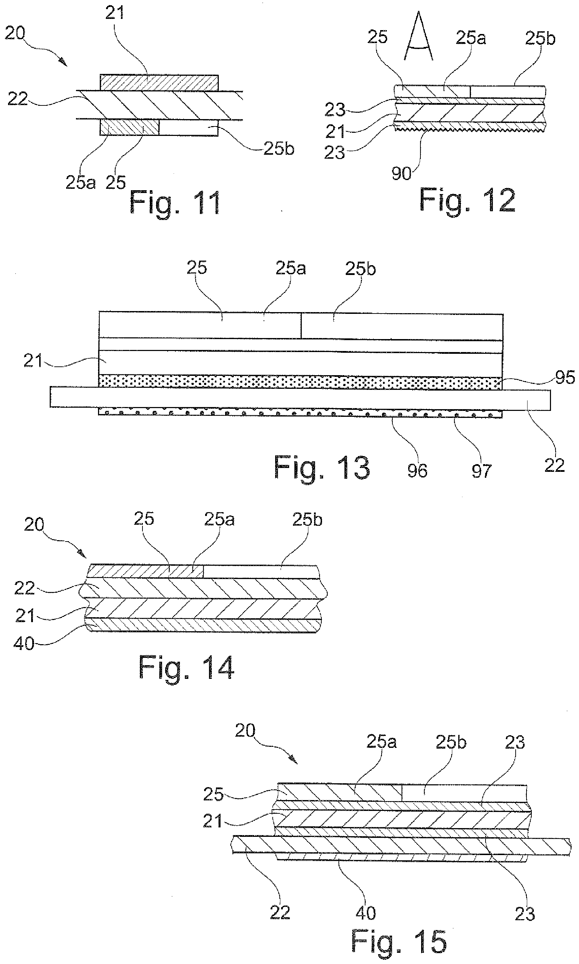

Par exemple, comme illustré à la figure 11, la couche de support 22 porte sur une face une structure d'opacité variable 25 comportant une métallisation avec des zones non opaques 25b démétallisées, et la couche holographique 21 est appliquée sur l'autre face. Cette réalisation convient tout particulièrement lorsque l'élément de sécurité 20 est intégré dans une fenêtre du document.

Dans l'exemple de la figure 12, l'élément de sécurité 20 comporte une structure diffusante 90, disposée sous la couche holographique 21 par rapport à l'observateur. La structure diffusante 90 est de préférence micro-embossée et constituée par exemple d'une couche d'un adhésif 23 qui est micro-embossée, et elle permet de diffuser la lumière et de rendre la visibilité de l'hologramme en volume moins dépendante de l'angle d'observation ou de l'angle d'enregistrement du motif. Ceci est avantageux. De plus, cela réduit le risque que l'angle de visibilité de l'hologramme soit confondu avec l'angle qui correspond à la réflexion spéculaire de la lumière (soleil ou lumière ponctuelle artificielle) sur la structure d'opacité variable 25, notamment lorsqu'elle est réfléchissante, par exemple métallisée, ce qui facilite l'observation de l'hologramme et de la structure d'opacité variable 25 en réflexion. De préférence, comme illustré, la structure d'opacité variable 25 est située à l'opposé de la structure diffusante 90. Sur cette figure 12, on n'a pas représenté la couche de support 22, qui peut être absente ou située par exemple entre la couche holographique 21 et la structure diffusante 90.

Dans d'autres variantes, la couche de support 22 porte du côté opposé aux couches holographique 21 et d'opacité variable 25 une ou plusieurs sécurités additionnelles, par exemple une impression d'une encre luminescente, un réseau lenticulaire, un autre hologramme en volume ou un hologramme de surface, une trame, un dépôt de métal semi-transparent, .... En particulier, l'élément de sécurité 20 peut présenter une combinaison d'agents luminescents au recto et au verso qui changent la couleur de l'hologramme en volume.

On a par exemple, comme illustré sur la figure 13, un premier agent luminescent 95 contenu dans une couche d'adhésif 23 assurant la fixation de la couche holographique 21 sur la couche de support 22 et un deuxième agent luminescent 96 contenu dans une couche 97 se superposant à la couche 23 contenant l'agent luminescent 95. Les agents luminescents 95 et 96 sont par exemple des pigments ou colorants, de préférence des colorants. La couche 97 est par exemple un vernis. Les couleurs de luminescence des agents luminescents 95 et 96 sont de préférence différentes. De préférence, les agents luminescents sont fluorescents.

On peut avoir dans cet exemple notamment une couche holographique qui restitue une couleur sous observation dans le visible et une autre couleur sous observation UV ou IR. De préférence, dans ce cas l'excitation est située du côté opposé à celui de l'observateur pour une vision par transmission.

Dans l'exemple de la figure 14, un film semi-réfléchissant 40 recouvre la couche holographique 21, d'un côté de la couche de support 22. De l'autre côté, la couche de support 22 porte une structure d'opacité variable 25.

Dans l'exemple de la figure 15, un film semi-réfléchissant 40 est présent dans l'élément de sécurité 20, se superposant à la structure d'opacité variable 25 et à la couche holographique 21. Celle-ci peut restituer un hologramme enregistré en réflexion ou en transmission. Le film semi-réfléchissant 40 se situe du côté de la couche holographique 21 opposé à la structure d'opacité variable 25.

Le film 40, de par son caractère semi-réfléchissant, donc non complètement opaque, permet d'observer le ou les motifs définis par la structure d'opacité variable 25, lorsque l'élément 20 est observé en lumière transmise.

Dans l'exemple de la figure 15, le film semi-réfléchissant 40 est présent sur la face de la couche de support 22 opposée à l'hologramme 21. Il s'agit par exemple d'un dépôt de métal de faible épaisseur.

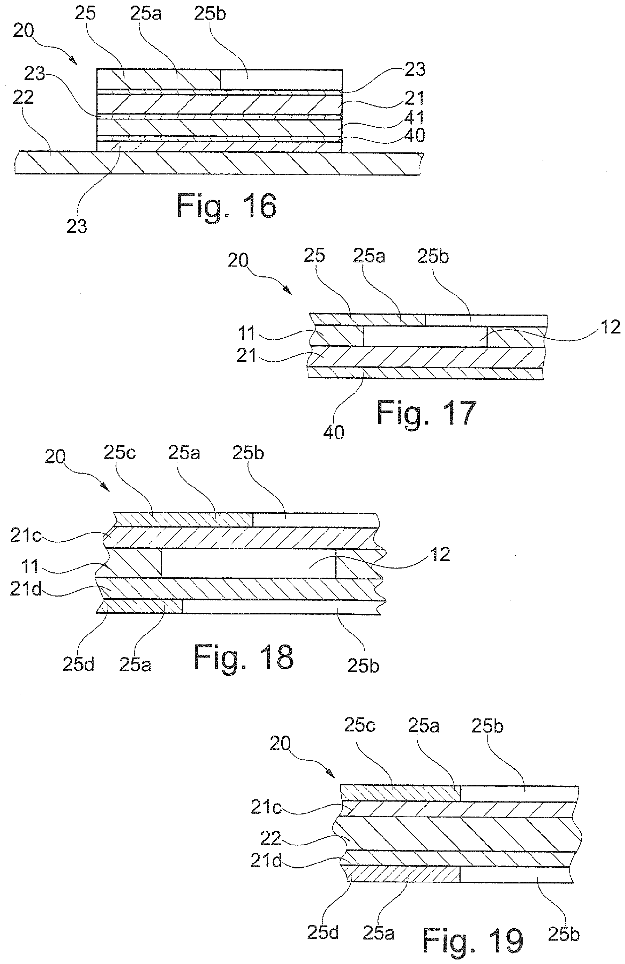

Dans la variante illustrée à la figure 16, le film semi-réfléchissant 40 est porté par un film transparent 41 qui est situé du même côté de la couche de support 22 que l'hologramme 21 et la structure 25 d'opacité variable.

Dans l'exemple de la figure 17, l'élément de sécurité 20 comporte une structure d'opacité variable 25 sur le substrat 11, du côté opposé à la couche holographique 21 et à la couche semi-réfléchissante 40.

Sur la figure 18, on a représenté un élément de sécurité 20 dont l'observation en lumière transmise s'effectue grâce à une fenêtre 12 d'un substrat 11 du document 10.

L'élément de sécurité 20 comporte une couche holographique 21c, recouverte par une structure d'opacité variable 25c, de préférence formée par métallisation/démétallisation.

L'hologramme 21c et la structure d'opacité variable 25c sont situés d'un côté du substrat 11.

L'élément 20 comporte, de l'autre côté du substrat 11, une autre couche holographique 21d, superposée à une structure d'opacité variable 25d, de préférence formée par métallisation/démétallisation.

Les zones opaques 25a de la structure d'opacité variable 25c peuvent se superposer exactement aux zones opaques 25a de la structure d'opacité variable 25d et il peut en être de même des zones non opaques 25b des structures d'opacité variable 25c et 25d. En variante, les zones opaques 25a ne se superposent pas exactement, de même que les zones non opaques 25b. Par exemple, les zones opaques 25a et non opaques 25b de la structure d'opacité variable 25c peuvent définir des micro-motifs à l'intérieur de motifs de plus grandes dimensions définis par les zones 25a et 25b de l'autre structure d'opacité variable 25d, par exemple un micro-texte à l'intérieur de caractères de plus grandes dimensions. Inversement, les micro-motifs sont définis par les zones 25a et 25b de la structure d'opacité variable 25d.

L'hologramme restitué par la couche holographique 21c peut être un hologramme enregistré en transmission et celui restitué par la couche holographique 21d un hologramme enregistré en réflexion.

Dans l'exemple de la figure 19, les couches holographiques 21c et 21d sont portées par une couche de support 22 transparente et située de part et d'autre de celle-ci. Les couches holographiques 21c et 21d sont recouvertes par des structures d'opacité variables respectives 25c et 25d. Les particularités décrites en référence à l'exemple de la figure 18 valent pour l'exemple de la figure 19.

La couche holographique 21 peut être enregistrée de façon à restituer un hologramme qui présente au moins deux zones 21a et 21b qui sont de couleurs différentes, par exemple lorsque l'élément de sécurité 20 est observé en réflexion sous éclairage en lumière blanche.

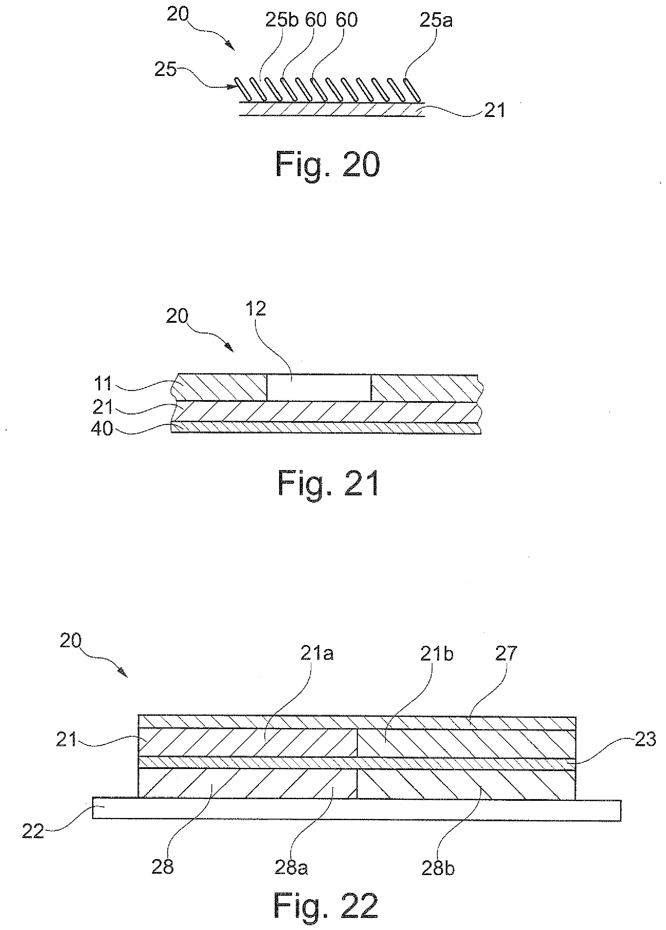

On a représenté à la figure 20 un élément de sécurité 20 dans lequel la couche d'opacité variable est formée par des pigments plaquettaires orientés, recouvrant l'hologramme en volume 21.

Les pigments 60 sont orientés sensiblement parallèlement les uns aux autres et sont non parallèles au plan de l'hologramme en volume 21, de telle sorte que pour une certaine direction d'observation, sensiblement parallèle à la direction d'orientation des pigments 60, il est possible de voir l'hologramme en volume à travers la couche d'opacité variable 25. Les pigments 60 peuvent être tels que décrits dans la publication WO 2012/176169 A1.

Sur la figure 21, on a représenté un élément de sécurité 20 selon un autre aspect de l'invention, qui comporte un film semi-réfléchissant 40 qui se superpose à la couche holographique 21. Une fenêtre 12, réalisée dans le substrat 11, permet d'observer en lumière transmise l'élément de sécurité 20. Selon cet autre aspect de l'invention, la structure d'opacité variable 25 des précédents exemples est absente.

L'élément de sécurité 20 peut comporter une couche de chromaticité variable, avec par exemple deux zones de couleurs différentes ou une ou plusieurs zones colorées et une ou plusieurs zones non colorées. La ou les zones colorées sont par exemple colorées par impression.

La disposition de la ou des zones colorées de cette couche de chromaticité variable peut s'effectuer de façon repérée par rapport à la disposition des différentes zones 21a et 21b de la couche holographique 21.

Par exemple, comme illustré à la figure 22, une zone 21a d'une couleur donnée de la couche holographique se superpose exactement avec une zone 28a d'une couleur donnée de la couche de chromaticité variable 28, de même que les zones 21b et 28b.

On a également illustré sur cette figure le fait que selon un autre aspect de l'invention, la structure d'opacité variable 25 des autres exemples peut être absente.

L'invention n'est pas limitée aux exemples illustrés.

Ainsi, la structure diffusante 90 de l'exemple de la figure 12 peut être ajoutée aux autres exemples illustrés, notamment à l'opposé de la structure d'opacité variable 25. Il en est de même de la couche semi-réfléchissante 40.

De façon plus générale, les particularités des exemples illustrés peuvent se combiner au sein de variantes non illustrés.

L'expression « comportant un » est synonyme de « comportant au moins un », sauf lorsque le contraire est spécifié.

## Revendications

1. Elément de sécurité (20) à intégrer à un article, notamment document (10), comportant :
- une couche holographique (21) permettant de générer un hologramme en volume, l'hologramme ayant été de préférence enregistré en réflexion ou en transmission,
- une structure d'opacité variable (25) non holographique, dont l'opacité varie dans le plan de la structure et/ou en fonction de l'angle d'observation, générée par la présence :
a) d'une part d'ajour(s) et/ou de zones au moins partiellement translucides (25b) ayant une translucidité en lumière du jour correspondant à une densité optique strictement inférieure à 0,7, et d'autre part de zone(s) au moins partiellement opaque(s) (25a) ayant une opacité en lumière du jour correspondant à une densité optique d'au moins 0,7, et/ou
b) de pigments plaquettaires orientés (60),
la structure d'opacité variable (25) étant superposée au moins partiellement à l'hologramme dans une région de l'élément de sécurité observable en lumière transmise, la structure d'opacité variable (25) comportant de préférence une métallisation et/ou une impression, la métallisation étant notamment sous forme de texte en négatif ou d'image, notamment tramée.

2. Elément selon la revendication 1, l'hologramme étant enregistré avec un aplat de couleur, notamment ne comportant qu'un seul aplat de couleur, en particulier vert, ou l'hologramme étant enregistré avec au moins deux couleurs, notamment deux aplats de couleur.

3. Elément selon l'une quelconque des revendications précédentes, la structure d'opacité variable (25) comportant des ajours, notamment des microperforations (25b), réalisés dans une couche au moins partiellement opaque, notamment une couche fibreuse.

4. Elément selon l'une quelconque des revendications précédentes, l'hologramme étant au moins partiellement visible d'un côté ou de l'autre de l'élément, directement ou indirectement à travers une ou plusieurs couches non opaques.

5. Elément selon l'une quelconque des revendications précédentes, comportant une couche colorée non opaque (23) superposée au moins partiellement à l'hologramme et/ou à la structure d'opacité variable (25), notamment une couche colorée présentant une couleur uniforme ou plusieurs aplats de couleur, notamment sous forme de zones juxtaposées, la couche colorée étant notamment colorée par impression et/ou colorée en masse.

6. Elément selon l'une quelconque des revendications précédentes, comportant une deuxième couche holographique (21d) permettant de générer un deuxième hologramme en volume, superposé au moins partiellement au premier hologramme (21c), le deuxième hologramme se superposant à au moins une zone non opaque de la structure d'opacité variable (25), l'un des deux hologrammes, de préférence celui le plus proche de l'observateur, étant de préférence un hologramme enregistré en transmission et l'autre un hologramme enregistré en réflexion, les deux hologrammes étant de préférence situés de part et d'autre d'un substrat (11) comportant une fenêtre (12) à travers laquelle une observation en lumière transmise peut s'effectuer.

7. Elément selon l'une quelconque des revendications précédentes, comportant des premier et deuxième hologrammes différents, notamment ayant des couleurs et/ou des motifs différents, notamment enregistrés dans ladite couche holographique ou dans des première et deuxième couches holographiques respectives, les premier et deuxième hologramme se superposant de préférence respectivement à des motifs différents définis par la structure d'opacité variable, par exemple des caractères alphanumériques différents d'un texte en écriture négative, ou étant destinés à apparaître dans des fenêtres différentes d'un substrat.

8. Elément de sécurité selon l'une quelconque des revendications précédentes, la structure d'opacité variable comportant des pigments plaquettaires orientés (60) offrant une opacité qui dépend de l'angle d'observation.

9. Elément selon l'une quelconque des revendications précédentes, comportant une couche d'un adhésif et/ou une couche de support (22), notamment un film en PET ou une couche en matière fibreuse.

10. Elément selon l'une quelconque des revendications précédentes, l'hologramme comportant deux zones juxtaposées (21a, 21b) de couleurs différentes, et l'élément comportant deux zones colorées juxtaposées (28a, 28b), de couleurs différentes, se superposant aux zones colorées de l'hologramme, notamment avec superposition d'une zone colorée de l'hologramme avec une zone colorée respective.

11. Elément selon l'une quelconque des revendications précédentes, comportant un film semi-réfléchissant (40) superposé au moins partiellement à la couche holographique et à la structure d'opacité variable.

12. Article sécurisé (10), notamment document sécurisé, comportant un élément de sécurité (20) tel que défini dans l'une quelconque des revendications précédentes, observable en lumière transmise et en réflexion au moins dans ladite région de superposition de l'hologramme en volume et de la structure d'opacité variable (25), l'élément de sécurité étant de préférence superposé à une fenêtre (12) du document, notamment une fenêtre traversante.

13. Article selon la revendication précédente, la fenêtre étant traversante et l'élément de sécurité (20) étant disposé d'un côté de la fenêtre, un film d'obturation (30) étant disposé de l'autre côté de la fenêtre, le film d'obturation étant notamment coloré, notamment dans la masse ou par impression.

14. Procédé d'authentification d'un article (10) tel que défini dans l'une quelconque des revendications 12 à 13, comportant l'observation de l'élément de sécurité (20), en réflexion et/ou en transmission, l'observation s'effectuant de préférence avec l'hologramme situé derrière la structure d'opacité variable (25) par rapport à l'observateur.

15. Procédé d'authentification selon la revendication 14, dans lequel on fait varier l'inclinaison de l'angle d'observation par rapport à l'élément de sécurité (20) et l'on tire une information concernant l'authenticité en cas d'apparition successive de motifs, notamment formés par démétallisation, le long de l'élément de sécurité.

## Patentansprüche

1. Sicherheitselement (20) zur Integration in einen Gegenstand, insbesondere in ein Dokument (10), umfassend:
- eine holographische Schicht (21), die das Erzeugen eines Volumenhologramms erlaubt, wobei das Volumenhologramm vorzugsweise als Reflexions- oder Transmissionshologramm aufgezeichnet wurde,
eine nicht-holographische Struktur mit variabler Opazität (25), deren Opazität sich in der Ebene der Struktur und/oder abhängig vom Beobachtungswinkel verändert, erzeugt durch das Vorhandensein von:
a) einerseits Öffnung(en) und/oder zumindest teilweise transluzenten Zonen (25b), die im Tageslicht eine Transluzenz haben, die einer optischen Dichte von weniger als 0,7 entspricht, andererseits von einer oder mehreren zumindest teilweise opaken Zone(n) (25a), die im Tageslicht eine Opazität haben, die einer optischen Dichte von mindestens 0,7 entspricht, und/oder
b) orientierten Pigmentplättchen (60),
wobei die Struktur mit variabler Opazität (25) das Hologramm wenigstens teilweise in einem Bereich des Sicherheitselementes, welcher im Durchlicht betrachtet werden kann, überlagert, wobei die Struktur mit variabler Opazität (25) vorzugsweise eine Metallisierung und/oder einen Druck aufweist, wobei die Metallisierung insbesondere in der Form eines negativen Texts oder Bilds vorliegt, insbesondere gerastert.

2. Element nach Anspruch 1, wobei das Hologramm mit einer Volltonfarbe aufgenommen wurde, insbesondere nur lediglich eine Volltonfarbe umfasst, insbesondere grün, oder das Hologramm mit wenigstens zwei Volltonfarben aufgenommen wurde, insbesondere mit genau zwei Volltonfarben.

3. Element nach einem der vorhergehenden Ansprüche, wobei die Struktur mit variabler Opazität (25) Öffnungen umfasst, insbesondere Mikroperforationen (25b), die in einer zumindest teilweise opaken Schicht, insbesondere einer Faserschicht, vorgesehen sind.

4. Element nach einem der vorangehenden Ansprüche, wobei das Hologramm von der einen oder der anderen Seite des Elements aus wenigstens teilweise direkt oder indirekt durch eine oder mehrere nicht-opake Schichten sichtbar ist.

5. Element nach einem der vorhergehenden Ansprüche, umfassend eine nicht-opake Farbschicht (23), die das Hologramm und/oder die Struktur mit variabler Opazität (25) zumindest teilweise überlagert, insbesondere eine Farbschicht mit einer gleichförmigen Farbe oder mehrere Farbfelder, insbesondere in Form von nebeneinanderliegenden Zonen, wobei die Farbschicht vorzugsweise durch Bedrucken und/oder in der Masse gefärbt ist.

6. Element nach einem der vorhergehenden Ansprüche, umfassend eine zweite holographische Schicht (21d), welche die Erzeugung eines zweiten Volumenhologramms ermöglicht, welches das erste Hologramm (21c) zumindest teilweise überlagert, wobei das zweite Hologramm mindestens einen nicht opaken Bereich der Struktur mit variabler Opazität (25) überlagert, wobei eines der beiden Hologramme, vorzugsweise das dem Beobachter am nächsten liegende, vorzugsweise ein als Transmissionshologramm aufgenommenes Hologramm ist und das andere als Reflexionshologramm aufgenommen ist, wobei die beiden aufgezeichneten Hologramme vorzugsweise auf beiden Seiten eines Substrats (11) mit einem Fenster (12) angeordnet sind, durch welches die Beobachtung im Durchlicht möglich ist.

7. Element nach einem der vorhergehenden Ansprüche, umfassend erste und zweite unterschiedliche Hologramme, insbesondere mit unterschiedlichen Farben und/oder unterschiedlichen Motiven, insbesondere aufgezeichnet in der holographischen Schicht oder in jeweils der ersten und zweiten holographischen Schicht, wobei das erste und zweite Hologramm vorzugsweise von jeweils unterschiedlichen Mustern überlagert sind, die von der Struktur mit variabler Opazität definiert sind, wie beispielsweise unterschiedlichen alphanumerischen Zeichen eines Textes in Negativschrift, oder dazu bestimmt sind, in verschiedenen Fenstern eines Substrats zu erscheinen.

8. Das Sicherheitselement nach einem der vorhergehenden Ansprüche, wobei die Struktur mit variabler Opazität orientierte Pigmentplättchen (60) umfasst, deren Opazität von dem Betrachtungswinkel abhängt.

9. Element nach einem der vorhergehenden Ansprüche, umfassend eine Klebstoffschicht und/oder eine Trägerschicht (22), insbesondere eine PET-Folie oder eine Schicht aus Fasermaterial.

10. Element nach einem der vorhergehenden Ansprüche, wobei das Hologramm zwei nebeneinanderliegende Bereiche (21a, 21b) in verschiedenen Farben umfasst und das Element zwei nebeneinanderliegende Zonen (28a, 28b) in verschiedenen Farben umfasst, welche die farbigen Bereiche der Hologramme überlagern, insbesondere durch Überlagerung eines farbigen Bereichs des Hologramms mit jeweils einer farbigen Zone.

11. Element nach einem der vorhergehenden Ansprüche, umfassend einen halbreflektierenden Film (40), der zumindest teilweise die holographische Schicht und die Struktur von variabler Opazität überlagert.

12. Gesicherter Artikel (10), insbesondere Sicherheitsdokument, umfassend ein Sicherheitselement (20), wie dieses in einem der vorhergehenden Ansprüche definiert ist, beobachtbar im Durchlicht und in Reflexion in wenigstens dem Überlagerungsbereich des Volumenhologramms mit der Struktur mit variabler Opazität (25), wobei das Sicherheitselement vorzugsweise ein Fenster (12) des Dokuments überlagert, vorzugsweise ein durchgehendes Fenster.

13. Artikel nach dem vorhergehenden Anspruch, wobei das Fenster durchgehend ist und das Sicherheitselement (20) auf einer Seite des Fensters angeordnet ist, wobei eine Abdeckfolie (30) auf der anderen Seite des Fensters angeordnet ist, wobei die Abdeckfolie insbesondere gefärbt ist, insbesondere in der Masse gefärbt oder bedruckt.

14. Verfahren zur Authentifizierung eines Artikels (10) nach einem der Ansprüche 12 bis 13, umfassend das Betrachten des Sicherheitselements (20) in Reflexion und/oder Transmission, wobei das Betrachten vorzugsweise mit in Bezug auf den Betrachter hinter der Struktur mit variabler Opazität (25) angeordnetem Hologramm erfolgt.

15. Verfahren zur Authentifizierung nach Anspruch 14, wobei die Neigung des Beobachtungswinkels relativ zu dem Sicherheitselement (20) variiert wird und eine die Authentizität betreffende Information in dem Fall erkannt wird, dass nacheinander Muster entlang des Sicherheitselements erscheinen, gebildet insbesondere durch Entmetallisierung.

## Claims

1. A security element (20) to be incorporated in an item, in particular a document (10), comprising:
- a holographic layer (21) for generating a volume hologram, the hologram having preferably been recorded in reflection or in transmission,
- a non-holographic variable opacity structure (25), the opacity of which varies in the plane of the structure and/or according to the angle of observation, generated by the presence of:
a) one or more cutouts and/or at least partially translucent areas (25b) having a translucence in daylight corresponding to an optical density strictly less than 0.7, as well as one or more at least partially opaque areas (25a) having an opacity in daylight corresponding to an optical density of at least 0.7, and/or
b) oriented platelet pigments (60),
the variable opacity structure (25) being at least partially superimposed on the hologram in a region of the security element observable in transmitted light, the variable opacity structure (25) preferably comprising metalization and/or printing, particularly in the form of text in negative or an image, particularly a raster image.

2. The element as claimed in claim 1, the hologram being recorded with a solid color, in particular comprising only a single solid color, particularly green, or the hologram being recorded with at least two colors, in particular two solid colors.

3. The element as claimed in any one of the preceding claims, the variable opacity structure (25) comprising cutouts, particularly microperforations (25b), made in an at least partially opaque layer, particularly a fibrous layer.

4. The element as claimed in any one of the preceding claims, the hologram being at least partially visible on one side or the other of the element, directly or indirectly through one or more non-opaque layers.

5. The element as claimed in any one of the preceding claims, comprising a non-opaque colored layer (23) at least partially superimposed on the hologram and/or on the variable opacity structure (25), particularly a colored layer presenting a uniform color or multiple solid colors, particularly in the form of juxtaposed areas, the colored layer being colored by printing and/or colored in the mass.

6. The element as claimed in any one of the preceding claims, comprising a second holographic layer (21d) for generating a second volume hologram, at least partially superimposed on the first hologram (21c), the second hologram being superimposed on at least one non-opaque area of the variable opacity structure (25), one of the two holograms, preferably the one closest to the observer, being preferably a hologram recorded in transmission and the other a hologram recorded in reflection, the two holograms being preferably located on each side of a substrate (11) comprising a window (12) through which an observation may be made in transmitted light.

7. The element as claimed in any one of the preceding claims, comprising different first and second holograms, particularly having different colors and/or patterns, particularly recorded in said holographic layer or in respective first and second holographic layers, the first and second hologram being respectively superimposed preferably on different patterns defined by the variable opacity structure, e.g. different alphanumeric characters of a text in negative writing, or being intended to appear in different windows of a substrate.

8. The security element as claimed in any one of the preceding claims, the variable opacity structure comprising oriented platelet pigments (60) offering an opacity which depends on the angle of observation.

9. The element as claimed in any one of the preceding claims, comprising a layer of an adhesive and/or a backing layer (22), particularly a film made of PET, or a layer made of fibrous material.

10. The element as claimed in any one of the preceding claims, the hologram comprising two juxtaposed areas of different colors (21a, 21b), and the element comprising two juxtaposed colored areas (28a, 28b), of different colors, superimposed on the colored areas of the hologram, particularly with superimposition of a colored area of the hologram with a respective colored area.

11. The element as claimed in any one of the preceding claims, comprising a semi-reflective film (40) at least partially superimposed on the holographic layer and the variable opacity structure.

12. A secured item (10), particularly a secured document, comprising a security element (20) as defined in any one of the preceding claims, observable in transmitted light and in reflection at least in said region of superimposition of the volume hologram and the variable opacity structure (25), the security element being preferably superimposed on a document window (12), particularly a through-window.

13. The item as claimed in the preceding claim, the window being a through-window and the security element (20) being arranged on one side of the window, with a sealing film (30) being arranged on the other side of the window, the sealing film being particularly colored, particularly being colored in the mass or by printing.

14. A method of authenticating an item (10) as defined in any one of the claims 12 to 13, comprising the observation of the security element (20), in reflection and/or in transmission, observation being preferably performed with the hologram located behind the variable opacity structure (25) with respect to the observer.

15. The method of authentication as claimed in claim 14, in which the inclination of the angle of observation is varied with respect to the security element (20) and information is drawn concerning authenticity in the event of the successive appearance of patterns, particularly formed by demetalization, along the security element.
